# EUROPEAN PATENT APPLICATION

(11) **EP 4 730 613 A1**
(43) Date of publication of application: **22.04.2026**
(21) Application number: 24207652.9
(22) Date of filing: 18.10.2024
(51) Int. Cl.: H02K 1/16, H02K 1/20, H02K 3/24, H02K 3/34, H02K 3/487, H02K 9/197

(54) **STATOR CORE FOR AN ELECTRIC MACHINE FOR A VEHICLE, STATOR ASSEMBLY FOR AN ELECTRIC MACHINE OF A VEHICLE, ELECTRIC MACHINE FOR A VEHICLE, AND VEHICLE**

(71) Applicant: Volvo Car Corporation, 405 31 Göteborg (SE)
(72) Inventor: OLDENBURG, Martina, 40531 Göteborg (SE); BARCK, Christoffer, 40531 Göteborg (SE); LENNSTRÖM, Håkan, 40531 Göteborg (SE)
(74) Representative: Kransell & Wennborg KB

(57) **Abstract**

The disclosure relates to a stator core (38) for an electric machine for a vehicle. The stator core (38) comprises a ring-shaped stator core body (40) extending along a middle axis, an inner lateral surface and an outer lateral surface (50). A plurality of circumferentially distributed stator slots (44) extend axially through the stator core body (40) and are arranged adjacent to the inner lateral surface. At least one coolant channel (52) extends between the outer lateral surface (50) and one of the stator slots (44) such that coolant may be delivered to the stator slot (44) or may be withdrawn from the stator slot (44) via the coolant channel (52). Moreover, the disclosure relates to a stator assembly for an electric machine of a vehicle comprising the stator core (38). Furthermore, the disclosure is directed to an electric machine for a vehicle comprising the stator core (38) or the stator assembly. Finally, the disclosure is directed to a vehicle comprising the electric machine.

## Description

### TECHNICAL FIELD

The present disclosure relates to a stator core for an electric machine for a vehicle. The stator core comprises a ring-shaped stator core body extending along a middle axis. Moreover, the stator core body comprises an inner lateral surface and an outer lateral surface, wherein a plurality of circumferentially distributed stator slots extend axially through the stator core body and are arranged adjacent to the inner lateral surface.

Moreover, the present disclosure relates to a stator assembly for an electric machine of a vehicle.

Furthermore, the present disclosure is directed to an electric machine for a vehicle.

Finally, the present disclosure is directed to a vehicle comprising the electric machine.

### BACKGROUND ART

A stator core of an electric machine for a vehicle may accumulate considerable heat while the electric machine is provided with electric energy for driving the vehicle. This is due to losses of electric energy that cannot be transferred into a rotational movement of the electric machine and, thus, into a movement of the vehicle.

If the accumulated heat is not discharged or dissipated to a sufficient degree, wear of the electric machine may be significantly increased, resulting in a shorter service life of the electric machine and higher maintenance costs of the vehicle. In extreme cases of heat accumulation, the electric machine may even be thermally damaged.

### SUMMARY

It is therefore an objective of the present invention to provide a stator core and a stator assembly for an electric machine of a vehicle that comprise improved cooling capabilities.

The problem is at least partially solved or alleviated by the subject matter of the independent claims of the present disclosure, wherein further examples are incorporated in the dependent claims.

According to a first aspect, there is provided a stator core for an electric machine for a vehicle. The stator core comprises a ring-shaped stator core body extending along a middle axis. The stator core body comprises an inner lateral surface and an outer lateral surface. A plurality of circumferentially distributed stator slots extend axially through the stator core body and are arranged adjacent to the inner lateral surface. At least one coolant channel extends between the outer lateral surface and one of the stator slots such that coolant may be delivered to the stator slot or may be withdrawn from the stator slot via the coolant channel. The ring-shaped stator core body extending along the middle axis is to be understood in that the stator core body has a ring-shaped base area that is extruded along an axis that is perpendicular to said ring-shaped base area and that goes through a geometric center point of the ring-shaped base area. It is understood that in this context the term extruded is used in order to describe the geometric form. The stator core body can be produced using any suitable production process which does not necessarily comprise an extrusion process. The inner lateral surface of the stator core body is a surface of the stator core body on which a normal vector extends radially inwards and towards the middle axis. The outer lateral surface of the stator core body is a surface of the stator core body on which a normal vector extends radially outwards and away from the middle axis. A stator slot extending axially through the stator core body is to be understood as a recess in the stator core body extending parallel to the middle axis. The stator slots are configured for accommodating at least one phase winding comprising at least one electric conductor. The stator slots being arranged adjacent to the inner lateral surface means that the stator slots extend from the inner lateral surface of the stator core body, i.e. the stator slots are radially open towards an inner side of the stator core body. Alternatively, this mean that the stator slots are entirely arranged within the stator core body in close proximity to the inner lateral surface of the stator core body, i.e. the stator slots are closed on a radially inner side with respect to the inner side of the stator core body. The at least one coolant channel has the effect that coolant may be supplied to the stator slot or withdrawn from the stator slot. When coolant is supplied to the stator slot via the coolant channel, coolant may flow from the coolant channel to one axial end of the stator slot or both axial ends of the stator slot. Thereby, heat may be transferred from the stator core body to the coolant. In other words, the coolant may cool the stator core body. In the alternative, in which the coolant is withdrawn from the stator slot, the circulation of coolant is oriented in an opposite direction. However, the effect remains the same. As has been mentioned before, at least a portion of the heat generated in the stator core originates from electric losses in the electric conductors arranged in the stator slots. Being able to supply coolant to at least one of the stator slots allows to provide cooling very close to the location where the heat is generated. Thus, the stator core and a stator assembly equipped therewith may be effectively and efficiently cooled.

In an example, the at least one coolant channel is arranged substantially at an axial center position in the one of the stator slots. Thus, when supplying coolant via the coolant channel, substantially equal portions of the coolant may be guided to each of the axial ends of the stator core body. This allows to provide cooling in a very uniform manner. The same applies if the direction of coolant flow is inverted, i.e. if the coolant is withdrawn via the coolant channel.

In another example, a plurality of coolant channels is provided, wherein each of the coolant channels extends between the outer lateral surface and one of the plurality of stator slots. Using a plurality of coolant channels allows to enhance the cooling performance since a flow of coolant through the stator core may be increased. In an example, a coolant channel is fluidically coupled to every second, every third or every fourth stator slot. Thus, uniform cooling of the stator core is achieved.

According to another example, the number of coolant channels equals the number of stator slots and a coolant channel extends between the outer lateral surface and each of the stator slots. Thus, cooling performance may be further enhanced. The same applies to the uniformity of cooling.

In an example, a coolant groove is provided on the outer lateral surface. The at least one coolant channel is fluidically coupled to the coolant groove. In an example, the coolant groove may be a circumferential groove in the outer lateral surface of the stator core body. In another example, the circumferential groove may be arranged substantially at an axial center position of the stator core body. The at least one coolant channel being fluidically coupled to the coolant groove has the effect that coolant provided to the coolant groove is efficiently and effectively delivered to the at least one coolant channel. In particular, coolant that is provided to the coolant groove may be efficiently distributed to all of the coolant channels in the stator core body leading to the plurality of stator slots.

According to a second aspect, there is provided a stator assembly for an electric machine of a vehicle. The stator assembly comprises:
- a stator core according to the first aspect,
- at least one phase winding comprising at least one electric conductor partially arranged in at least one of the stator slots and partially extending axially over the stator core, and
- a positioning means arranged in at least one of the plurality of stator slots and contacting both a wall of the at least one stator slot and the portion of the electric conductor arranged in the at least one stator slot, wherein the at least one positioning means delimits a coolant channel extending inside the at least one stator slot and wherein the coolant channel extending inside the at least one stator slot is fluidically coupled to the coolant channel of the stator core.

The at least one phase winding comprising at least one electric conductor is configured to conduct one phase of an electric current that is provided to the stator assembly. The at least one phase winding is only partially arranged in at least one of the stator slots because contact elements for providing the phase winding with electric current are arranged axially outside the stator slot. Also the at least one bend of the electric conductor of the at least one phase winding is arranged axially outside the stator slot. When energized by electric current, a magnetic field may be created by the phase winding that may cause a rotor of the associated electric machine to rotate. The winding of the at least one electric conductor may comprise a hairpin winding. Alternatively, the winding of the at least one electric conductor may comprise a sectioned winding wire with a structurally firm profile such as, e.g. a Litz-wire or a laminated winding wire. In an example, there are three phase windings comprising at least one electric conductor partially arranged in the plurality of circumferentially distributed stator slots. The at least one positioning means arranged in the at least one of the plurality of stator slots only partially fills a space inside the at least one stator slot between the wall of the at least one stator slot and the electric conductor of the at least one phase winding. Thus, a coolant channel is created between the walls of the at least one stator slot, the electric conductor of the at least one phase winding and the positioning means. Thus, when coolant is provided to this coolant channel, for example via the circumferential groove in the stator core body and the coolant channel extending from the circumferential groove to the at least one stator slot, the coolant comes in direct contact with the electric conductor of the at least one phase winding. This means that the coolant may be provided in close proximity to the location where heat to be withdrawn is generated. After having cooled the electric conductor of the at least one phase winding, the coolant may be discharged from the at least one stator slot through one or through both of its axial ends. This allows for a particularly efficient heat removal from the electric conductor of the at least one phase winding. Heat removal from the electric conductor is necessary because the electric conductor of the at least one phase winding is a source of heat during operation of the stator assembly, i.e. when electric current is provided to the at least one phase winding. It is noted that the same applies if a direction of the coolant flow is inverted. In an example, a positioning means is arranged in all of the stator slots of the stator assembly. This allows for a very efficient heat removal from all of the electric conductors of all of the phase windings of the stator assembly.

It is noted that, due to the fact that the positioning means delimits a coolant channel extending inside the at least one stator slot, the positioning means fulfils two functions. First, the positioning means positions the electric conductor inside the stator slot. Thus, due to the positioning means, the electric conductor may be kept in a desired position inside the stator slot, i.e. the electric conductor does not move. Second, the positioning means forms a coolant channel, thereby allowing efficient and effective cooling of the electric conductor.

In an example, the positioning means is at least partially elastic. Thus, the electric conductor of the at least one phase winding may be clamped between the walls of the at least one stator slot through a deformation of the positioning means. This has the effect that the electric conductor of the at least one phase winding is reliably secured inside the at least one stator slot, e.g. with respect to a radial direction and/or a circumferential direction. Moreover, the elasticity of the positioning means may serve as a mechanical damper. The at least partially elastic positioning means may be applied to the electric conductor of the at least one phase winding prior to an insertion of the electric conductor of the at least one phase winding into the at least one stator slot. In an example, the positioning means may comprise a rubbery material, for example a silicone material and/or a polyurethane material. A rubbery material has proven to provide enough flexibility during insertion of the electric conductor provided with the rubbery material as positioning means into the at least one stator slot. At the same time, a rubbery material of the positioning means has shown to still provide enough frictional force between the positioning means and the wall of the at least one stator slot. Thus, an efficient manufacturing process of the stator assembly is provided and the electric conductor of the at least one phase winding is reliably secured in the at least one stator slot in a radial direction of the stator assembly. Furthermore, a liquid-tight delimitation of the coolant channel extending inside the at least one stator slot may be achieved using rubber material.

In an example, the positioning means comprises at least one bar-shaped positioning element. The at least one bar-shaped positioning element is at least partially arranged between the conductor and the wall of the at least one stator slot. The at least one bar-shaped positioning element is to be understood as a positioning element substantially extending along a straight line. In an example, the bar-shaped positioning element may extend between the conductor and the wall of the at least one stator slot in an axial direction of the stator assembly. The axial direction of the stator assembly is a direction parallel to the middle axis of the stator core body comprised in the stator assembly. This has the effect that coolant that is provided to the at least one stator slot, for example via the circumferential groove and the coolant channel extending from the circumferential groove to the at least one stator slot, can efficiently be guided towards an axial end of the at least one stator slot, i.e. an axial end of the stator assembly. It is understood that the at least one bar-shaped positioning element may be interrupted at an axial position of the stator assembly corresponding to the axial position of the coolant channel extending from the circumferential groove to the at least one stator slot. This way, coolant may be provided to a full circumference of the electric conductor of the at least one phase winding arranged in the stator slot. In other words, the distribution of coolant around the full circumference of the conductor of the at least one phase winding is not hindered by the at least one bar-shaped positioning element. This also applies if the direction of coolant flow is inverted. Due to a resulting large surface area of the electric conductor of the at least one phase winding that may be in contact with the coolant, an even more efficient heat removal from the electric conductor of the at least one phase winding may be achieved.

In an example, the positioning means comprises at least one ball-shaped positioning element. The at least one ball-shaped positioning element is at least partially arranged between the conductor and the wall of the at least one stator slot. The at least one ball-shaped positioning element is to be understood as a positioning element in the form of a ball or at least in the form of a fraction of a ball, e.g. three quarters, half or a quarter of a ball. In an example, there is a plurality of ball-shaped positioning elements at least partially arranged between the electric conductor of the at least one phase winding and the wall of the at least one stator slot. The plurality of ball-shaped positioning elements may be arranged adjacent to one another or at a distance from each other. In an example, the plurality of ball-shaped positioning elements may be arranged in a regular pattern. This means that the ball-shaped positioning elements may form corners of adj acently arranged triangles, oblongs, in particular squares, hexagons or the like. In an alternative example, the plurality of ball-shaped positioning elements may be arranged in an irregular or random pattern. Using ball-shaped positioning elements, a flow of coolant may be flexibly guided through the inside of the at least one stator slot by arranging the ball-shaped positioning elements accordingly. Moreover, compared to the bar-shaped positioning elements, the ball-shaped positioning elements may create a turbulent flow of the coolant between an opening of the coolant channel extending from the circumferential groove towards the at least one stator slot and an axial end of the at least one stator slot. A turbulent flow of the coolant may enhance a heat removal from the electric conductor of the at least one phase winding. This is because the ball-shaped positioning elements may act as chicane elements for a flow of coolant along the electric conductor of the at least one phase winding. A mixing of thermal layers within the coolant channel extending inside the at least one stator slot due to the more turbulent flow of the coolant compared to the coolant flow in case of the at least one bar-shaped positioning element allows making full use of heat dissipating capabilities of a given flow rate of coolant along the electric conductor of the at least one phase winding.

In an example, the positioning means comprises a cover element at least partially covering the at least one stator slot at a radially inner side. Thus, the cover element may be applied in case of a stator slot being radially open towards an inner side of the stator core body. The cover element may act as a sealant and prevent coolant from entering an air gap between the stator core and the rotor of the electric machine. Moreover, the cover element may act as an additional radial fixation means for securing the electric conductor of the at least one phase winding in the stator slot. For this purpose, the cover element may comprise a coupling portion configured to be coupled with at least one of the stator slot walls of the stator slot. The coupling portion may comprise a tongue or a groove configured to interact with a groove or a tongue in the at least one of the stator slot walls, respectively. In an example, the coupling portion may comprise two tongues or two grooves configured to interact with a groove or a tongue in each of two stator slot walls of the stator slot, respectively. In another example, the coupling portion may comprise two tongues interacting with a groove in each of two stator slot walls of the stator slot. The coupling portion provides a stable fixation of the cover element at a radial end of the stator slot.

In an example, the cover element comprises a groove for guiding coolant. If the cover element is inserted into the associated stator slot, the groove may extend in parallel to the middle axis of the stator core body. Due to this orientation of the groove, coolant that is provided to the stator slot may at least in part be guided to axial ends of the stator slot. In particular, coolant provided to the stator slot via the coolant channel extending from the circumferential groove of the stator core body to the stator slot may at least in part be guided to axial ends of the stator slot. Still in the case in which the cover element is inserted into the stator slot, the groove may be arranged adjacent to the electric conductor of the at least one phase winding. Since the cover element is inserted into a radially open stator slot on the radially inner side where no stator slot wall is present, the groove in the cover element may act as a coolant channel additionally to the coolant channel that is delimited between the positioning means and at least one stator slot wall. Alternatively, the groove in the cover element may be regarded as forming a portion of the coolant channel. The groove in the cover element may be in direct contact with the electric conductor of the at least one phase winding. Thus, a total surface area of the electric conductor of the phase winding being in direct contact to a coolant channel is increased. This increases efficiency of the heat removal from the electric conductor of the phase winding.

In an example, the positioning means comprises a liner element. The liner element at least partially covers a wall of the at least one stator slot. The liner element may be shaped correspondingly to the stator slot such that the liner element may be received inside the stator slot. In this context, the shape of the liner element may be regarded as a negative of the shape of the stator slot. In other words, the liner element fits into the at least one stator slot. The liner element may be particularly thin such that it partially covers a wall of the at least one stator slot but does not fill up a whole cross sectional area of the stator slot when sectioned perpendicularly to the middle axis of the stator core body. The liner element may be arranged between the wall of the at least one stator slot and the conductor of the at least one phase winding, which is also arranged inside the stator slot. This has the effect that the liner element keeps the conductor of the at least one phase winding at a distance from the wall of the at least one stator slot. Moreover, the liner element may ensure that certain portions of the stator slot are kept free for allowing a flow of coolant. In other words, the liner element at least partially delimits a coolant channel extending inside the at least one stator slot.

In an example, the liner element comprises at least one ridge and/or at least one recess configured for guiding coolant. The at least one ridge and/or the at least one recess may be in direct contact to the electric conductor of the at least one phase winding. Since the shape of the at least one ridge and/or the shape of the at least one recess does not correspond to the shape of the electric conductor of the at least one phase winding, at least one coolant channel is created between the liner element and electric conductor of the at least one phase winding. The at least one coolant channel may guide coolant that is provided to the stator slot towards axial ends of the stator slot. In particular, coolant provided to the stator slot via the coolant channel extending from the circumferential groove of the stator core body to the stator slot may at least in part be guided to axial ends of the stator slot by the at least one coolant channel. Said at least one coolant channel is in direct contact with the electric conductor of the at least one phase winding. Thus, coolant that flows within said at least one coolant channel also is in direct contact with the electric conductor of the at least one phase winding. This has the effect that heat may be efficiently removed from the electric conductor of the at least one phase winding by the coolant flowing and said at least one coolant channel. The at least one ridge in the liner element may further have the effect of a mechanical interlocking with the conductor of the at least one phase winding. Therefore, frictional forces created between the liner element and walls of the stator slot may be transferred to the conductor of the at least one phase winding. This has the effect that the conductor of the at least one phase winding may be reliably secured in the stator slot by the at least one ridge in the liner element.

In an example, the stator assembly further comprises a sealing ring arranged on at least one axial end of the stator core. The sealing ring is configured for preventing coolant from entering an air gap between the stator core and a rotor of the electric machine. For this purpose, the sealing ring may be tightly fitted to the one axial end of the stator core. The sealing ring may be axially centered with respect to the stator core body. This means that a middle axis of the sealing ring corresponds to the middle axis of the stator core body. The sealing ring may be arranged at a distance from the middle axis of the stator core body that is smaller than a distance from any of the coolant channels delimited within the stator slot to the middle axis of the stator core body. Thus, coolant can smoothly exit the stator slot at the at least one axial end of the stator core from the coolant channels delimited within the stator slot without being obstructed by the sealing ring. In a further example, the stator assembly may comprise two sealing rings, one sealing ring on either side of the stator core body. This has the effect that coolant that exits the stator slot at both axial ends of the stator core body is prevented from entering an air gap between the stator core and the rotor of the electric machine.

In an example, the stator assembly further comprises at least one further positioning element interposed between the stator core and a bend of the electric conductor, wherein the bend and the further positioning element are arranged axially outside the stator core. The at least one further positioning element constrains an axial movement of the electric conductor in an axial direction of the stator core. In an example, 3 to 6 further positioning elements are arranged on either side of the stator core. In another example, the further positioning elements are arranged on either side of the stator core between any of the stator core slots. The further positioning element may be at least partially elastic. This enables the position of the electric conductor to be axially fixed relative to the stator core by elastic deformation forces of the further positioning element. Preferably, the positioning means may comprise a rubbery material, for example a silicone material and/or a polyurethane material. A rubbery material has proven to provide enough deformation capacity at a sufficient level of deformation force to be able to axially fixate the electric conductor. Moreover, a rubbery material has shown to provide excellent properties in dampening a potentially rattling movement and/or shaking of the electric conductors within the stator slot due to vibrations that occur while driving the vehicle.

In an example, an axial end of the at least one stator slot forms a coolant outlet. The coolant outlet is to be understood as a coolant outlet from the stator assembly. Thus, heat may be discharged from the stator assembly in an efficient manner. The coolant may be collected after having been discharged from the coolant outlet and, after having dissipated its heat to an environment of the stator assembly, may be circled back in a coolant cycle, for example to the circumferential groove in the stator core body. From the circumferential groove, the collected coolant may re-enter the stator slot through the coolant channel extending between the circumferential groove and the stator slot. In an example, both axial ends of the at least one stator slot form a coolant outlet. It is noted that at least one axial end of each stator slot which is used as a coolant channel needs to form a coolant outlet. In an example, both axial ends of each stator slot used as a coolant channel forms a coolant outlet.

According to a third aspect, there is provided an electric machine for a vehicle comprising the stator core according to the first aspect or the stator assembly according to the second aspect. Providing such an electric machine has the effect that coolant may be supplied to the stator slot or withdrawn from the stator slot via the coolant channel extending between outer lateral surface and the stator slot. Since the coolant comes into direct contact with the at least one electric conductor of the phase winding arranged inside the stator slot, a particularly efficient heat removal from the electric conductor of the at least one phase winding is ensured. Heat removal from the electric conductor is necessary because the electric conductor of the at least one phase winding is a source of heat during operation of the stator assembly, i.e. when electric current is provided to the at least one phase winding for causing the rotor of the electric machine rotate.

According to a fourth aspect, there is provided a vehicle comprising the electric machine according to the third aspect. Providing such a vehicle has the effect that coolant may be supplied to the stator slot or withdrawn from the stator slot via the coolant channel extending between outer lateral surface and the stator slot. Since the coolant comes into direct contact with the at least one electric conductor of the phase winding arranged inside the stator slot, a particularly efficient heat removal from the electric conductor of the at least one phase winding is ensured. Heat removal from the electric conductor is necessary because the electric conductor of the at least one phase winding is a source of heat during operation of the stator assembly, i.e. when electric current is provided to the at least one phase winding for causing the rotor of the electric machine rotate. Due to the enhanced cooling, the electric machine may be operated at high performance. Additionally or alternatively, the electric machine has a long service life.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising an electric machine according to the present disclosure,
- Figure 2: shows the electric machine of Figure 1 in a sectional view,
- Figure 3: shows a stator assembly according to the present disclosure of the electric machine of Figure 2, wherein the stator assembly comprises a stator core according to the present disclosure,
- Figure 4: shows a perspective view of the stator assembly of Figure 3,
- Figure 5: shows a detailed view of a stator slot of the stator assembly according to the present disclosure holding several electric conductors, wherein a positioning means arranged between stator slot walls and electric conductors comprises a liner element,
- Figure 6: shows a cover element, which is used for covering a radially inner side of the stator slot of Figure 5,
- Figure 7: shows a detailed view of a portion of the stator slots of the stator assembly according to the present disclosure holding several electric conductors, wherein a positioning means arranged between stator slot walls and electric conductors comprises a bar-shaped elastic material,
- Figure 8: shows electric conductors comprising the bar-shaped elastic material of Figure 7 as positioning means in an isolated view,
- Figure 9: shows a detailed view of a portion of the stator slots of the stator assembly according to the present disclosure holding several electric conductors, wherein a positioning means arranged between stator slot walls and electric conductors comprises a ball-shaped elastic material,
- Figure 10: shows electric conductors comprising the ball-shaped elastic material of Figure 9 as positioning means in an isolated view, wherein the positioning means are arranged in a regular pattern,
- Figure 11: shows electric conductors comprising the ball-shaped elastic material of Figure 9 as positioning means in an isolated view, wherein the positioning means are arranged in an irregular pattern,
- Figure 12: shows the stator core according to the present disclosure in an isolated view,
- Figure 13: shows a coolant channel extending into a stator slot of the stator core of Figure 12,
- Figure 14: shows a sectional view of the stator assembly according to the present disclosure,
- Figure 15: shows a means for attaching a further positioning element to an axial end of the stator core according to the present disclosure between two stator slots,
- Figure 16: shows the further positioning element attached to an axial end of the stator core according to the present disclosure between two stator slots, and
- Figure 17: shows the further positioning element attached to an axial end of the stator core according to the present disclosure between two stator slots, wherein a bend of the electric conductor is guided around the further positioning element.

### DETAILED DESCRIPTION

The Figures are merely schematic representations and serve only to illustrate examples of the disclosure. Identical or equivalent elements are in principle provided with the same reference signs.

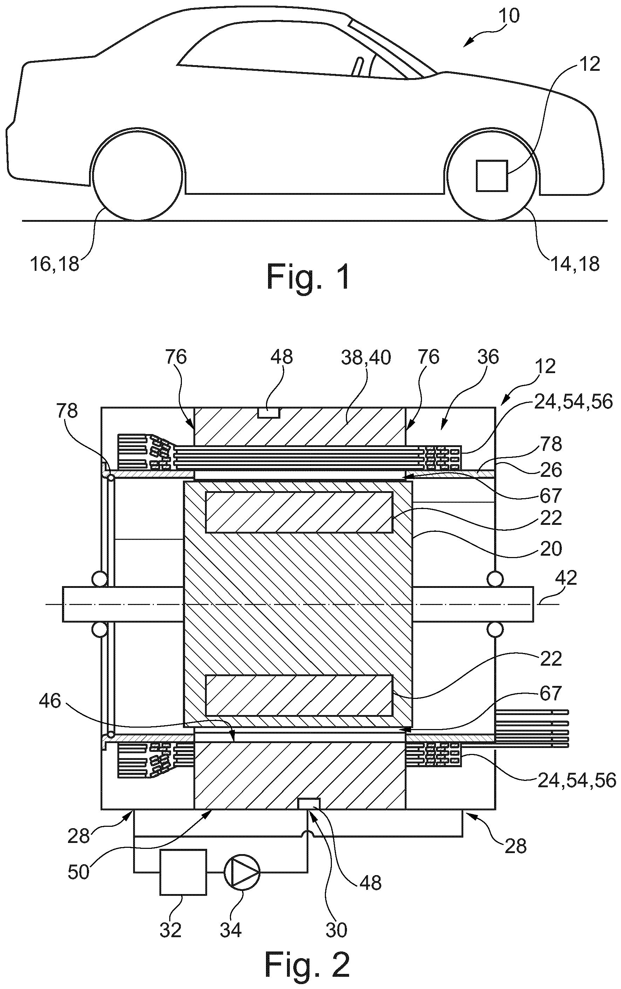

Figure 1 shows a vehicle 10.

The vehicle 10 comprises an electric machine 12 for driving a front axle 14 of the vehicle. Of course, the electric machine 12 may also be configured to drive a rear axle 16 of the vehicle 10 or both the front axle 14 and the rear axle 16. Moreover, the electric machine 12 may also be configured to drive a single road wheel 18 of the vehicle 10.

In Figure 2, the electric machine 12 is shown in further detail in a sectional view.

The electric machine 12 comprises a rotor 20. The rotor 20 may for example be a permanently excited rotor, a slip ring-rotor or a squirrel-cage rotor. Thus, the magnetic coupling means 22 for magnetically interacting with stator windings 24 of the electric machine 12 may comprise permanent magnets, wound coils or a cage, respectively.

The electric machine 12 also comprises a housing 26.

In the present example, the housing 26 comprises two coolant outlets 28 and a coolant inlet 30. The two coolant outlets 28 are connected to the coolant inlet 30 via a radiator 32 and a pump 34.

The pump 34 is configured to pump coolant from the coolant outlets 28 of the housing through the radiator 32 to the coolant inlet 30 of the housing 26. At the radiator 32, the coolant may discharge heat to an environment of the electric machine 12 and/or of the vehicle 10.

The electric machine 12 further comprises a stator assembly 36.

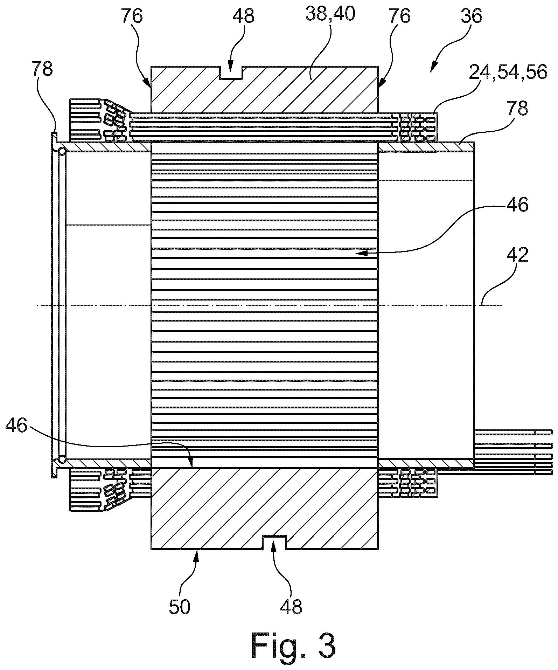

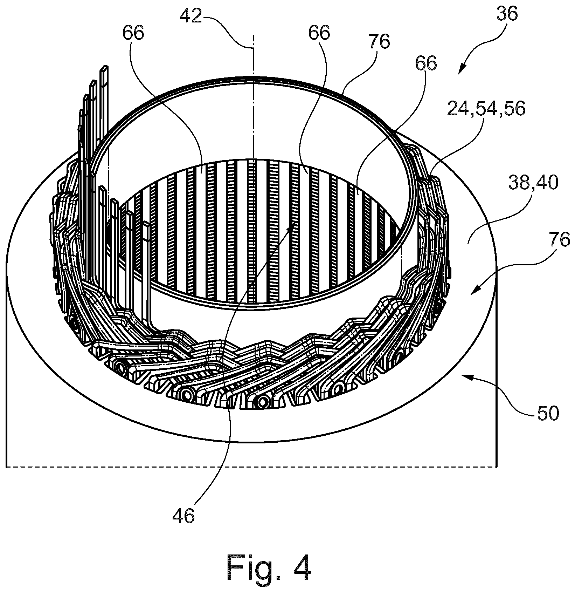

The stator assembly 36 comprises a stator core 38 comprising a stator core body 40 (see Figures 3 and 4).

The stator core body 40 is a ring-shaped body that extends along a middle axis 42 which in the present example coincides with an axis of rotation of the rotor 20.

The stator core body 40 comprises a plurality of stator slots 44. The stator slots 44 are circumferentially distributed at an inner lateral surface 46 of the stator core body 40.

In the present example, the stator slots 44 are open towards a radially inward direction of the stator core 38. However, it is also conceivable that the stator slots 44 are closed towards the radially inner direction of the stator core 38.

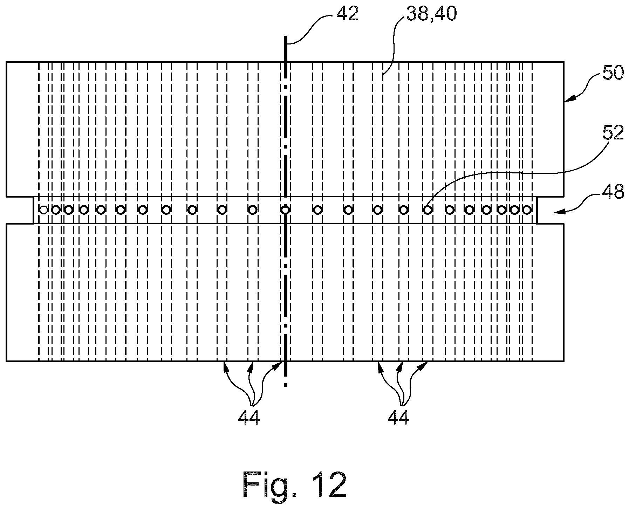

The stator core body 40 further comprises a circumferential groove 48 in an outer lateral surface 50 of the stator core body 40 for distributing coolant around a circumference of the stator core body 40 (see also Fig. 12). The coolant is provided to the circumferential groove 48 via the coolant inlet 30 of the housing 26.

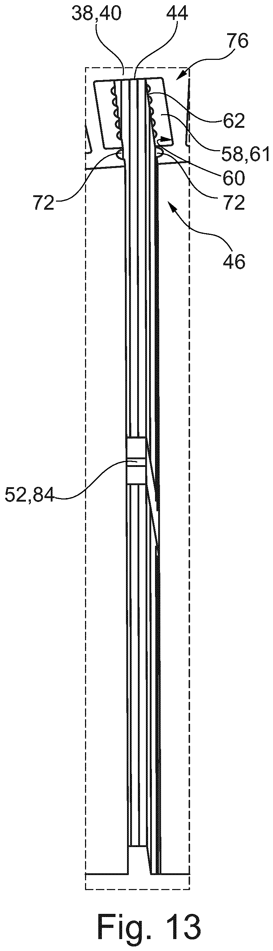

The stator core body 40 also comprises a plurality of radial coolant channels 52 extending between the circumferential groove 48 and the plurality of stator slots 44. In more detail, each stator slot 44 is connected to the circumferential groove 48 in the outer lateral surface 50 of the stator core body 40 via a radial coolant channel 52 (see also Figures 12 and 13).

Thus, coolant that is provided via the coolant inlet 30 to the circumferential groove 48 is distributed to each of the stator slots 44 via a radial coolant channel 52.

As stator windings 24, the stator assembly 36 of the present example comprises hairpin windings 54. The hairpin windings 54 are partially inserted into each of the stator slots 44. If the hairpin windings 54 are energized by electric current, they create magnetic fields that cause the rotor 20 of the electric machine 12 to spin and consequently the vehicle 10 to be driven.

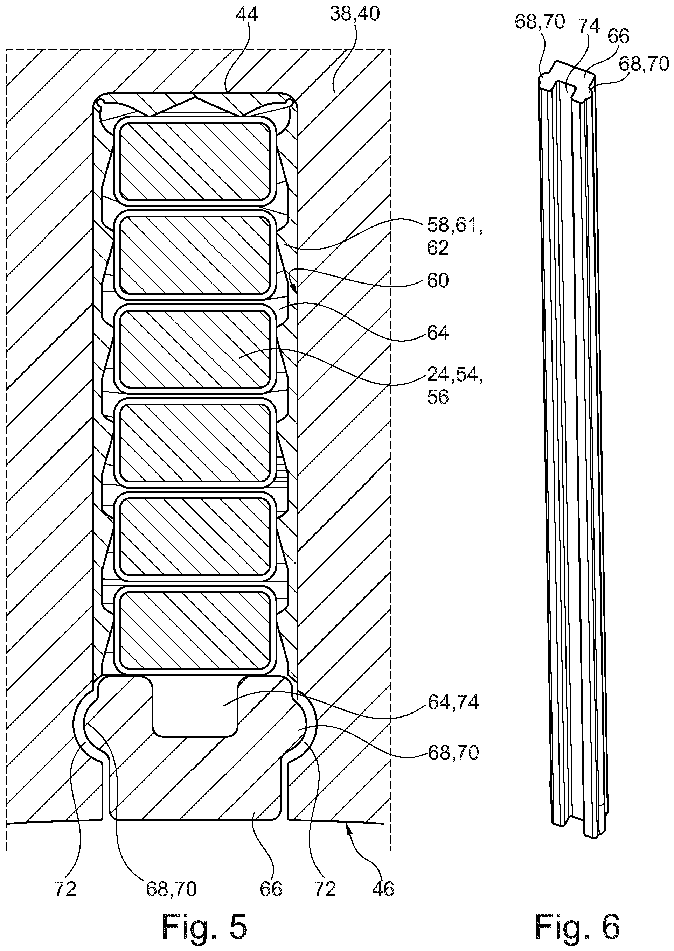

Figure 5 shows a sectional view of a stator slot 44 comprising six electric conductors 56 of hairpin windings 56. Figure 5 is illustrative for all stator slots 44.

Moreover, a ridged liner element 58 is shown to be inserted into the stator slot 44. The ridged liner element 58 covers three walls 60 of the stator slot 44. Thus, the ridged liner element 58 keeps the electric conductors 56 of the hairpin windings 54 at a distance from the stator slot walls 60. Thus, the liner element 58 qualifies as a positioning means 61. In particular, using the liner element 58, the electric conductors 56 are positioned with respect to a circumferential direction. Moreover, due to the fact that the conductors 56 are clamped between opposite ridges, they are also positioned with respect to a radial direction and an axial direction.

Due to the shape of its ridges 62 not corresponding to the shape of the stacking of electric conductors 56, the liner element 58 does not entirely fill in area between the stator slot walls 60 and the electric conductors 56 of the hairpin windings 54.

Thus, axial coolant channels 64 between the liner element 58 and the electric conductors 56 are created. The axial coolant channels 64 extend along a length direction of the stator slot 44. The length direction of the stator slot 44 is parallel to the middle axis 42 of the stator core body 40.

Thus, coolant that is provided to the stator slot 44 via the radial coolant channel 52 extending from the circumferential groove 48 in the outer lateral surface 50 of the stator core body 40 to the stator slot 44 enters the axial coolant channels 64 extending between the liner element 58 and the electric conductors 56.

To allow this, the liner element 58 is interrupted along the length direction of the stator slot 44 at a position where the radial coolant channel 52 opens into the stator slot 44 (see Figure 13).

Coming back to Figure 5, additionally a cover element 66 is provided at the inner radial opening of the stator slot 44. The inner radial opening of the stator slot 44 opens in a direction towards the middle axis 42 of the stator core body 40.

The cover element 66 closes the inner radial opening of the stator slot 44. In particular, the cover element 46 seals off the stator slot 44 from an air gap 67 between the stator core 38 and the rotor 20 of the electric machine 12. Thus, coolant that flows within the stator slot 44 is prevented from leaking into the air gap 67.

The cover element 66 comprises two tongues 68 as a connecting portion 70 to the stator slot 44. Two of the stator slot walls 60 comprise corresponding grooves 72 that engage with the two tongues 68 of the cover element 68. Due to this engagement of the cover element 66 with the stator slot walls 60, the cover element 66 is radially secured in the stator slot 44.

The electric conductors 56 of the hairpin windings 54 and the liner element 58 are also radially secured in the stator slot 44 by means of the secured cover element 66. This means that the electric conductors 56 of the hairpin windings 54 cannot fall out of the stator slot 44 into a radially inward direction towards the middle axis 42 of the stator core body 40. Thus, also the cover element 66 qualifies as a positioning means 61.

Furthermore, the cover element 66 comprises a groove 74 that extends along a length direction of the cover element 66 (see also Figure 6).

When the cover element 66 is inserted into the stator slot 44 such that the cover element 66 covers the stator slot 44 as shown in Figure 5, the groove 74 extends along the length direction of the stator slot 44, which is parallel to the middle axis 42 of the stator core body 40.

The groove 74 in the cover element 66 serves as an additional portion of the axial coolant channel 64 for coolant that is provided to the stator slot 44.

All portions of the axial coolant channels 64 that extend inside the stator slot 44 are in direct contact with the electric conductors 56 of the hairpin windings 54. In other words, coolant that flows within the axial coolant channels 64 extending inside the stator slot 44 directly contacts the electric conductors 56 of the hairpin windings 54. This allows for a particularly efficient heat transfer from the electric conductors 56 of the hairpin windings 54 to the coolant.

After having flown alongside the electric conductors 56 of the hairpin windings 54, the coolant exits the stator slot 44 through both axial ends 76 of the stator slot 44.

At each of the axial ends 76 of the stator core 38, there is arranged a sealing ring 78 (see Figures 2 to 4). Each of the sealing rings 78 share the same middle axis 42 as the stator core body 40. In other words, the two sealing rings 78 are centered with respect to the stator core body 40.

However, an outside radius of the sealing rings 78 is smaller than a smallest distance from an axial coolant channel 64 extending within the stator slot 44 and the middle axis 42 of the stator core body 40. Due to this, coolant can exit the stator slot 44 without its flow being hindered by the sealing ring 78.

The sealing rings 78 on either side of the stator core 38 ensure that no coolant enters the air gap 67 between the stator core 38 and the rotor 20. In other words, coolant is kept outside of the inner area of the electric machine 12 delimited by the sealing rings 78 (see Figure 2). After having exited the stator slots 44 at the axial ends 76 of the stator core 40, the coolant may flow around an outside circumference of the sealing rings 78 until it is collected adjacent to the coolant outlets 28 of the housing 26 of the electric machine 12.

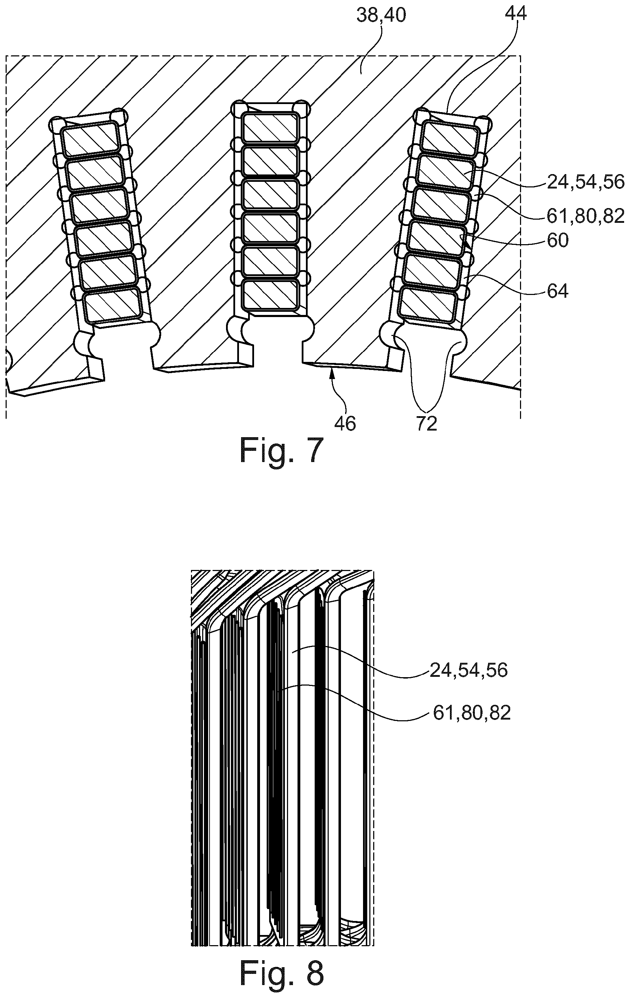

Figures 7 and 8 show a first alternative of positioning means 61. Only the differences with respect to the liner element 58 as described above will be explained in the following.

The positioning means 61 of the first alternative comprise an elastic material 80 in the form of bars. The bars are applied to the electric conductors 56 of the hairpin windings 54 prior to insertion of the hairpin windings 54 into the stator slots 44.

As the hairpin windings 54 are inserted into the stator slots 44, the elastic material 80 on the electric conductors 56 of the hairpin windings 54 gets deformed and thereby clamps the hairpin windings 54 between walls 60 of the stator slots 44.

Again, the elastic material 80 in the form of bars does not fill up the entire area between the walls 60 of the stator slots 44 and the electric conductors 56 of the hairpin windings 54. Thus, axial coolant channels 64 extending along the length direction of the stator slot 44 are created. The coolant flowing in these axial coolant channels 64 is in direct contact with the electric conductors 56 of the hairpin windings 54, thereby allowing an efficient heat transfer from the electric conductors 56 of the hairpin windings 54 to the coolant.

Figure 8 shows the electric conductors 56 of the hairpin windings 54 and the elastic material 80 forming positioning means 61 in the form of bars in an isolated view.

It is observable that there are multiple bar-shaped positioning elements 82 per stator slot 44 that extend in parallel to each other. More specifically, the bar-shaped positioning elements 82 all extend along a length direction of the stator slot 44. This facilitates a laminar flow of coolant along the electric conductors 56 of the hairpin windings 54. More specifically, a laminar flow between the outlet 84 of the radial coolant channel 52 into the stator slot 44 and the axial ends 76 of the stator slot 44 is facilitated.

Although not shown in Figure 8, the bar-shaped positioning elements 82 may be interrupted at an axial position of the outlet 84 of the radial coolant channel 52 in order to allow a distribution of coolant around the full circumference of the stacking of electric conductors 56 of the hairpin windings 54.

Although not shown in Figure 7, it is understood that a cover element 66 will be provided at radially open ends of the stator slot 44 in order to prevent coolant from leaking into the air gap 67 between the stator core 38 and the rotor 20.

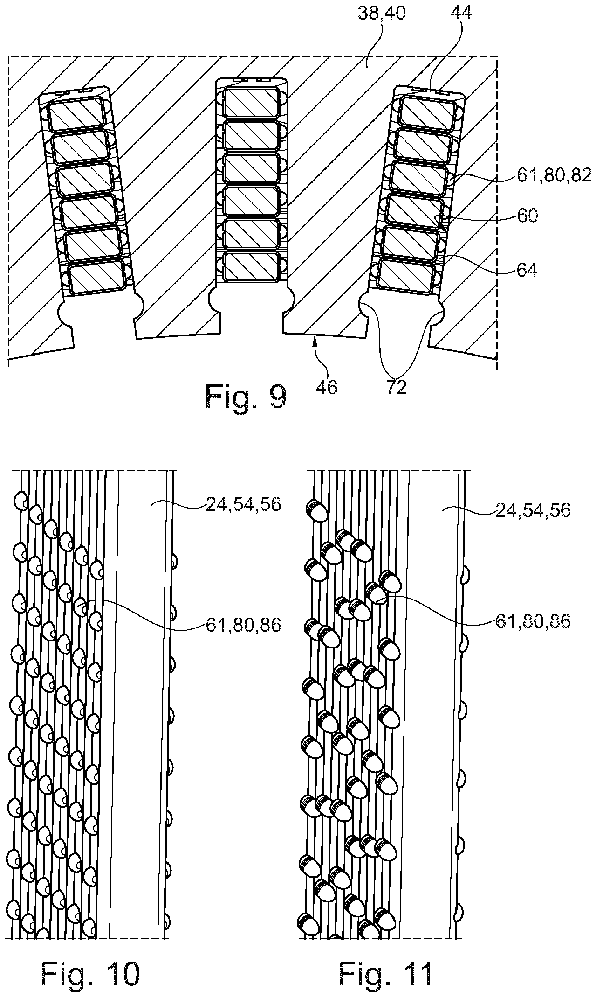

Figures 9 to 11 show a second alternative of positioning means 61.

The positioning means 61 of the second alternative also comprise an elastic material 80. Only the differences with respect to the liner element 58 forming positioning means 61 and the elastic material 80 forming a positioning means 61 in the form of bars will be explained in the following.

The positioning means 61 of the second alternative are ball-shaped.

Ball-shaped means that the elastic material 80 is provided in the form of spots onto the electric conductors 56 of the hairpin windings 54.

The spots may be in the form of full balls, half balls, quarter balls and/or a mixture thereof. In the present example, the ball-shaped positioning elements 86 are in the form of half balls. This means that the positioning means 61 are in the form of half of a sphere.

Like the bar-shaped positioning elements 82, the ball-shaped positioning elements 86 get deformed when the hairpin windings 54 with the applied positioning means 61 are inserted into the stator slots 44. Thus, also the ball-shaped positioning elements 86 clamp the electric conductors 56 of the hairpin windings 54 between walls 60 of the stator slots 44 due to elastic deformation forces.

The ball-shaped positioning elements 86 may be arranged in a regular pattern on the surface of the electric conductors 56 of the hairpin windings 54. In the example of Figure 10, the ball-shaped positioning elements 86 are arranged at relative positions to each other forming corners of imaginary squares that are arranged adjacent to one another.

Alternatively, the ball-shaped positioning elements 86 may be arranged in an irregular pattern on the surface of the electric conductors 56 of the hairpin windings 54. Such a situation is shown in the example of Figure 11.

In any case of arrangement of the ball-shaped positioning elements 86, they may create a more turbulent flow of coolant along the electric conductors 56 of the hairpin windings 54 than the bar-shaped positioning elements 82. This is because the ball-shaped positioning elements 86 may act as chicanery elements for the flow of coolant from the outlet 84 of the radial coolant channel 52 towards the axial ends 76 of the stator slot 44. A high degree of mixing of fluid within the flow of coolant due to the chicanery elements may allow for a higher heat dissipation from the electric conductors 56 of the hairpin windings 54 through the coolant at a given flow rate of coolant.

Compared to the regular arrangement of ball-shaped positioning elements 86, the irregular arrangement of ball-shaped positioning elements 86 may create an even more turbulent flow of coolant along the electric conductors 56 of the hairpin windings 54. The even higher degree of mixing of fluid within the flow of coolant may allow for an even higher heat dissipation from the electric conductors 56 of the hairpin windings 54 through the coolant at a given flow rate of coolant.

It has been observed that all of the above-described positioning means 61 eliminate or at least reduce a rattling, i.e. shaking, movement of the electric conductors 56 of the hairpin windings 54 inside the stator slot 44 in a radial direction. Particularly dampening properties of the positioning means 61 from elastic material 80 have caused a rattling movement of said electric conductors 56 in the radial direction to be eliminated.

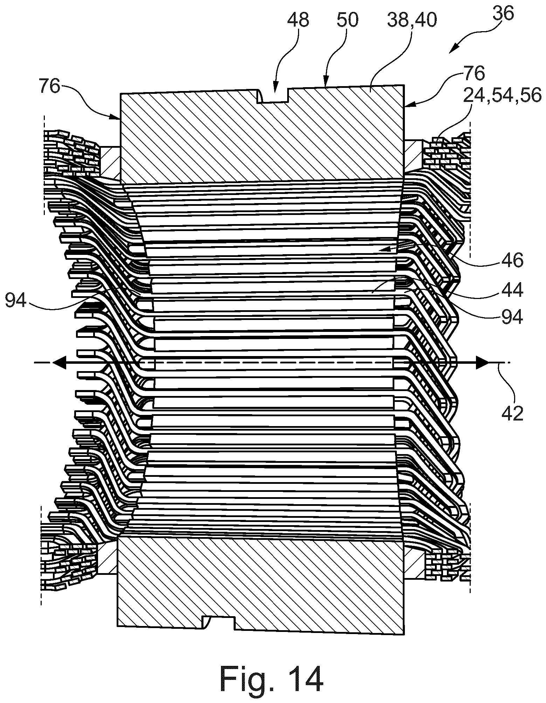

In order to also eliminate or at least reduce a rattling, i.e. shaking, movement of the electric conductors 56 of the hairpin windings 54 inside the stator slot 44 in an axial direction (see arrows in Figure 14), further positioning elements 88 are arranged between the axial end faces of the stator core 38 and bends 94 of the electric conductors 56. When considering a circumferential direction, the further positioning elements 88 are arranged between neighboring stator slots 44.

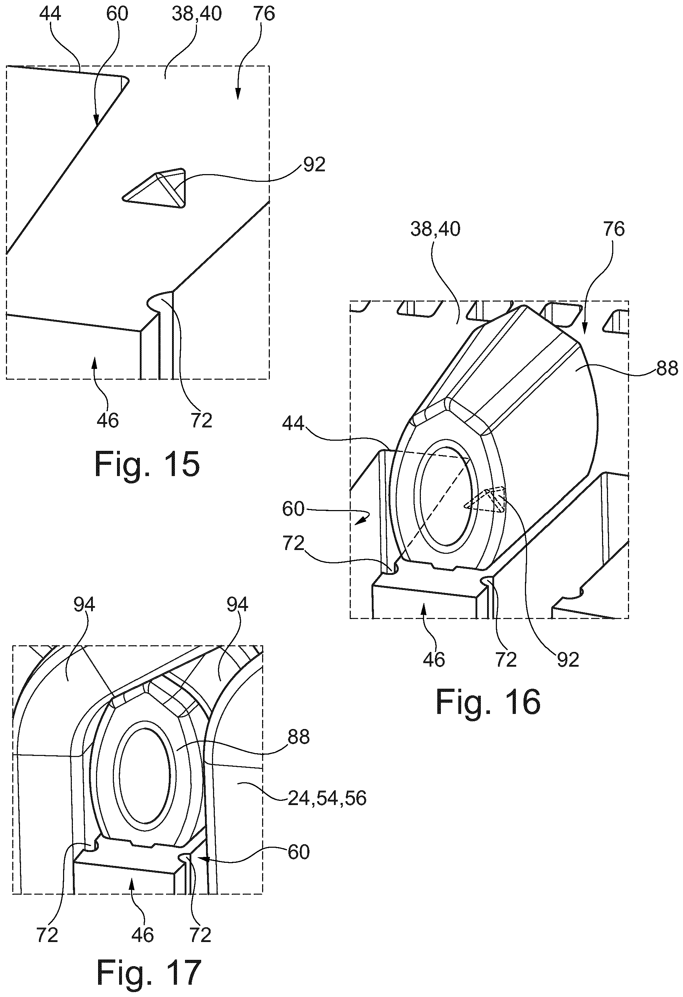

Figure 15 shows a detailed view of a portion of an axial end face of the stator core 38. A snap lock 92 formed as a local protrusion is provided on this end face to which the further positioning element 88 can be attached. Alternatively, the axial end face of the stator core 38 comprises a chamfer element for attaching the further positioning element 88 to the stator core 38.

The further positioning element 88 attached to the stator core 38 is shown in Figure 16. The further positioning element 88 comprises a tubular shape and is made of an elastic material having high dampening properties, e.g. rubber, silicone or polyurethane.

Figure 17 shows that a bend 94 of an electric conductor 56 of the hairpin windings 54 is guided around the tubular shape of the further positioning element 88.

Since bends 94 of the same electric conductor 56 are guided around the tubular shape of further positioning elements 88 on either side of the stator core body 40, the hairpin windings 54 are axially secured in the stator slot 44 by means of the further positioning element 88.

In other words, an axial movement of the electric conductors 56 of the hairpin windings 54 within the stator slot 44 is prevented by the tubular shape of the further positioning elements 88 and by the bends 94 of the electric conductors 56 of the hairpin windings 54 being tightly guided around the further positioning element 88 on either side of the stator core 38.

Altogether, using the positioning means 61 axial coolant channels 64 are created inside the stator slots 44, thereby allowing efficient and effective cooling of the stator winding 24. At the same time, using the positioning means 61 and the further positioning elements 88, the stator winding 24 is fixed with respect to the stator core 38 along the axial direction, along a radial direction and along a circumferential direction. Thus, the stator winding 24 cannot move with respect to the stator core 38.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: electric machine
- 14: front axle
- 16: rear axle
- 18: road wheel
- 20: rotor
- 22: magnetic coupling means
- 24: stator winding
- 26: housing
- 28: coolant outlet
- 30: coolant inlet
- 32: radiator
- 34: pump
- 36: stator assembly
- 38: stator core
- 40: stator core body
- 42: middle axis
- 44: stator slot
- 46: inner lateral surface
- 48: circumferential groove
- 50: outer lateral surface
- 52: radial coolant channel
- 54: hairpin winding
- 56: electric conductor
- 58: liner element
- 60: stator slot wall
- 61: positioning means
- 62: ridge
- 64: axial coolant channel
- 66: cover element
- 67: air gap
- 68: tongue
- 70: connecting portion
- 72: groove of stator slot wall
- 74: groove of cover element
- 76: axial end
- 78: sealing ring
- 80: elastic material
- 82: bar-shaped positioning element
- 84: outlet of radial coolant channel
- 86: ball-shaped positioning element
- 88: further positioning element
- 92: snap lock
- 94: bend of electric conductor

## Claims

1. A stator core (38) for an electric machine (12) for a vehicle (10), the stator core (38) comprising a ring-shaped stator core body (40) extending along a middle axis (42), wherein the stator core body (40) comprises an inner lateral surface (46) and an outer lateral surface (50),
wherein a plurality of circumferentially distributed stator slots (44) extend axially through the stator core body (40) and are arranged adjacent to the inner lateral surface (46), and
wherein at least one coolant channel (52) extends between the outer lateral surface (50) and one of the stator slots (44) such that coolant may be delivered to the stator slot (44) or may be withdrawn from the stator slot (44) via the coolant channel (52).

2. The stator core (38) according to claim 1, wherein a coolant groove (48) is provided on the outer lateral surface (50) and wherein the at least one coolant channel (52) is fluidically coupled to the coolant groove (48).

3. A stator assembly (36) for an electric machine (12) of a vehicle (10), the stator assembly (36) comprising:
- a stator core (38) according to claim 1 or 2,
- at least one phase winding comprising at least one electric conductor (56) partially arranged in at least one of the stator slots (44) and partially extending axially over the stator core (38), and
- a positioning means (61) arranged in at least one of the plurality of stator slots (44) and contacting both a wall (60) of the at least one stator slot (44) and the portion of the electric conductor (56) arranged in the at least one stator slot (44), wherein the at least one positioning means (61) delimits a coolant channel (64) extending inside the at least one stator slot (44) and wherein the coolant channel (64) extending inside the at least one stator slot (44) is fluidically coupled to the coolant channel (52) of the stator core.

4. The stator assembly (36) according to claim 3, wherein the positioning means (61) is at least partially elastic.

5. The stator assembly (36) according to claim 3 or 4, wherein the positioning means (61) comprises at least one bar-shaped positioning element (82), wherein the at least one bar-shaped positioning element (82) is at least partially arranged between the conductor (56) and the wall (60) of the at least one stator slot (44).

6. The stator assembly (36) according to any one of claims 3 to 5, wherein the positioning means (61) comprises at least one ball-shaped positioning element (86), wherein the at least one ball-shaped positioning element (86) is at least partially arranged between the conductor (56) and the wall (60) of the at least one stator slot (44).

7. The stator assembly (36) according to any one of claims 3 to 6, wherein the positioning means (61) comprises a cover element (66) at least partially covering the at least one stator slot (44) at a radially inner side.

8. The stator assembly (36) according to claim 7, wherein the cover element (66) comprises a groove (74) for guiding coolant.

9. The stator assembly (36) according to any one of claim 3 to 8, wherein the positioning means (61) comprises a liner element (58), at least partially covering a wall (60) of the at least one stator slot (44).

10. The stator assembly (36) according to claim 9, wherein the liner element (58) comprises at least one ridge (62) and/or at least one recess configured for guiding coolant.

11. The stator assembly (36) according to any one of claims 3 to 10, further comprising a sealing ring (78) arranged on at least one axial end (76) of the stator core (38), wherein the sealing ring (78) is configured for preventing coolant from entering an air gap (67) between the stator core (38) and a rotor (20) of the electric machine (12).

12. The stator assembly (36) according to any one of claims 3 to 11, further comprising at least one further positioning element (88) interposed between the stator core (38) and a bend (94) of the electric conductor (56), wherein the bend (94) and the further positioning element (88) are arranged axially outside the stator core (38).

13. The stator assembly (36) according to any one of claims 3 to 12, wherein an axial end (76) of the at least one stator slot (44) forms a coolant outlet.

14. An electric machine (12) for a vehicle (10) comprising the stator core (38) according to claim 1 or 2 or the stator assembly (36) according to any one of claims 3 to 13.

15. A vehicle (10) comprising the electric machine (12) according to claim 14.
